# EUROPEAN PATENT APPLICATION

(11) **EP 4 417 588 A1**
(43) Date of publication of application: **21.08.2024**
(21) Application number: 23157445.0
(22) Date of filing: 20.02.2023
(51) Int. Cl.: C04B 28/04, C04B 24/04, C04B 24/06, C04B 38/02, C04B 38/08, C04B 38/10, C04B 111/28, C04B 111/52

(54) **LIGHTWEIGHT CEMENTITIOUS COMPOSITION HAVING KINETIC REGULATOR**

(71) Applicant: Sika Technology AG, 6340 Baar (CH)
(72) Inventor: MÜLLER, Thomas, 69207 Sandhausen (DE); UNSELD, Johannes Otto, 38678 Clausthal-Zellerfeld (DE); HELLER, Thomas, 74909 Meckesheim (DE)
(74) Representative: Sika Patent Attorneys

(57) **Abstract**

The present invention relates to lightweight cementitious compositions comprising at least one cement and at least one kinetic regulator selected from hydroxy carboxylic acids and their derivatives, especially esters of hydroxy carboxylic acids. The present invention also relates to the use of lightweight cementitious compositions having a kinetic regulator as part of a thermal insulation system, as part of an acoustic insulation system, as part of a fire protection system, as a cover board, as an annular fill, as trench backfill, as precast block, as precast panel, as precast wall element, as load-bearing thermal insulation element, as sub-base in road construction, or as infill of hollow blocks.

## Description

### Technical Field

The present invention relates to lightweight cementitious compositions comprising a kinetic regulator selected from hydroxy carboxylic acids and their derivatives, especially esters of hydroxy carboxylic acids. The kinetic regulator reduces the maximum heat flow from lightweight cementitious compositions.

### Background of the invention

It is a well-known phenomenon that cementitious materials develop and release heat upon hydration. Especially the hydration reaction of cement is exothermic and a considerable amount of energy, often called the heat of hydration, is released upon hydration of cement. This is also the case for lightweight cementitious compositions.

Especially where lightweight cementitious compositions are placed in thick layers, such as for example as fills or during the production of massive building elements such as blocks or walls, a significant temperature difference between internal and external layers during setting and curing may occur. Also, very high core temperatures can be encountered, such as higher than 60°C or higher than 80 °C, which may lead to formation of metastable hydrate phases. As a consequence, lightweight cementitious compositions, especially when applied in thick layers, have an increased risk of cracking and strength development can be less predictable and sometimes lower than expected. This is even mor ethe case because lightweight cementitious compositions often have lower strength.

Current measures to counteract this problem include the use of special cements with low heat development, cooling of aggregates, placement of concrete or mortar in several subsequent layers, curing with thermal insulation, active cooling, and design of joints and sections to facilitate heat dissipation. All of these measures require additional steps which can be difficult to realize on a job site and which increase the complexity and cost of a given project considerably.

Retarders for the hydration reaction of cementitious materials are known. However, such retarders typically either inhibit the hydration reaction at least for some time or they slow down the hydration reaction. Inhibition typically does not balance the heat release and when hydration finally starts, the full heat of hydration is released. A slowdown of the hydration reactions balances the release of the heat of hydration over a longer time, but also prolongs the time until which a desired degree of curing, often a desired strength, is reached and thus may slow down the whole construction process.

What is needed is a kinetic regulator for lightweight cementitious materials that can control or balance the heat release over the time of curing. Ideally, such a kinetic regulator does not inhibit the start of cement hydration significantly. Additionally, such a kinetic regulator does not unduly prolong the curing of lightweight cementitious materials. Such kinetic regulators will be very useful to avoid elevated temperatures in the core of lightweight cementitious materials applied in thick layers and/or to also avoid temperature differences between internal and external layers.

### Summary of the invention

It is an objective of the present invention to provide lightweight cementitious compositions with a controlled and/or balanced heat release during setting and/or over the time of curing. Preferably, the start of cement hydration, measurable as open time, of lightweight cementitious compositions of the present invention is only minimal delayed or delayed to an extent that is acceptable for practical applications. Further preferably, the curing of lightweight cementitious compositions of the present invention is not unduly prolonged. It is a further objective of the present invention to provide uses for lightweight cementitious compositions with a controlled and/or balanced heat release during setting and/or over the time of curing.

Surprisingly, the objectives could be solved by a cementitious composition as claimed in claim 1.

In particular, it was found that a kinetic regulator selected from hydroxy carboxylic acids and their derivatives, especially from esters of hydroxy carboxylic acids can control and/or balance the heat release during setting and/or over the time of curing of lightweight cementitious compositions. Thereby, for example, the peak in heat flow, or maximum heat flow, from a lightweight cementitious composition comprising said kinetic regulator can be reduced by between 10 - 90 % as compared to the same lightweight cementitious composition without said kinetic regulator.

Further aspects of the present invention are the subject of independent claims. Advantageous embodiments of the present invention are the subject of dependent claims.

### Ways for carrying out the invention

In a first aspect the present invention relates to a cementitious composition, especially a concrete or a mortar, comprising
a) at least one cement,
b) at least one kinetic regulator selected from hydroxy carboxylic acids and their derivatives, especially esters of hydroxy carboxylic acids,
c) optionally aggregates,
d) optionally further additives, and
e) optionally water,
characterized in that the density of the cementitious composition, especially concrete or a mortar, measured according to standard EN 12390-7:2019, is lower than 2.0 g/cm³, preferably lower than 1.75 g/cm³, more preferably lower than 1.5 g/cm³, still more preferably lower than 1.0 g/cm³, especially lower than 0.8 g/cm³.

Within the present context, a lightweight cementitious composition is a cementitious composition having a density, measured according to standard EN 12390-7:2019, of lower than 2.0 g/cm³, preferably lower than 1.75 g/cm³, more preferably lower than 1.5 g/cm³, still more preferably lower than 1.0 g/cm³, especially lower than 0.8 g/cm³. The measurement of density is done as received.

Cements can in particular be cements of type CEM I, CEM II, CEM III, CEM IV, and CEM V as described in standard EN 197-1,cement of type CEM VI as described in standard DIN EN 197-5, calcium aluminate cements as described in standard EN 14647, and/or calcium sulphoaluminate cements. Cements according to other standards, for example Portland cement according to standard ASTM C140-05, or cements according to Chinese, Japanese, Indian or other standards are likewise encompassed.

According to embodiments, the cement comprises Portland clinker, preferably the cement is of type CEM I, CEM II, CEM III, CEM IV, or CEM V as described in standard EN 197-1, or cement of type CEM VI as described in standard DIN EN 197-5, or cement according to standard ASTM C140-05.

The cementitious composition may additionally comprise binders other than cement. Especially such binders can be pozzolanes, latent hydraulic binders, and/or calcium sulfate.

Pozzolanes and latent hydraulic materials preferably are selected from the group consisting of slag, clay, calcined clay, especially metakaolin, kiln dust, microsilica, fly ash, pyrogenic silica, precipitated silica, silica fume, zeolite, rice husk ash, burnt oil shale, and natural pozzolane such as pumice, trass, and finely ground limestone.

Calcium sulfate (CaSO₄), for example in form of gypsum, may be present as part of the cement.

A hydroxy carboxylic acid within the present context is an organic molecule comprising at least one carboxylic acid group and at least one hydroxy group. Preferably, the hydroxy carboxylic acid is selected from citric acid, tartaric acid, lactic acid, gluconic acid, malic acid, glycolic acid, and/or mandelic acid. Very preferably, the derivatives of the hydroxy carboxylic acid are esters of hydroxy carboxylic acid. Preferred esters of hydroxy carboxylic acid are selected from citric acid esters, tartaric acid esters, lactic acid esters, gluconic acid esters, malic acid esters, glycolic acid esters, and/or mandelic acid esters.

Very preferably, the at least one kinetic regulator is selected from citric acid, citric acid esters, tartaric acid esters, lactic acid esters, gluconic acid esters, malic acid esters, glycolic acid esters, and/or mandelic acid esters.

According to embodiments, the kinetic regulator is a citric acid ester. Especially, the kinetic regulator is an ester of citric acid with a polyhydric alcohol. Further preferred are mixed esters of citric acid and fatty acids with polyhydric alcohols.

Citric acid within the present context is meant to also encompass isocitric acid.

According to embodiments, the kinetic regulator is an ester of citric acid according to the following general structure (I) 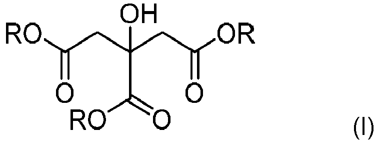 where each R, independently of one another, is H, or a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms, with the provision that at least one of R is not H.

It has been found that kinetic regulators of the general structure (I) and with at least one hydrophobic moiety R, are particularly suitable within the present context. Suitable kinetic regulators of the general structure (I) are monobutyl citrate, dibutyl citrate, tributyl citrate, monopentyl citrate, dipentyl citrate, tripentyl citrate, monohexyl citrate, dihexyl citrate, trihexyl citrate, monooleyl citrate, dioleyl citrate, trioleyl citrate, monostearyl citrate, distearyl citrate, tristearyl citrate, monolauryl citrate, dilauryl citrate, trilauryl citrate, monoprenyl citrate, diprenyl citrate, triprenyl citrate, monocyclohexyl citrate, dicyclohexyl citrate, tricyclohexyl citrate, monophenyl citrate, diphenyl citrate, triphenyl citrate.

According to further embodiments, the kinetic regulator is an ester of citric acid with a polyhydric alcohol. Such esters have of the following general structure (II): 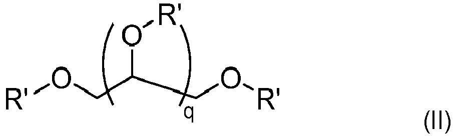
where q is an integer between 0 - 4, preferably 1 or 2, and
R' independently of one another are H, or C(O)-Rʺʺ, or a moiety of general structure (III), with the provision that at least one of R' is a moiety of general structure (III), where Rʺʺ is an unbranched C2 - C30 alkyl chain or an unbranched C2 - C30 alkenyl chain, wherein the alkenyl chain may comprise between 1 - 6 double bonds, and where the general structure (III) is: 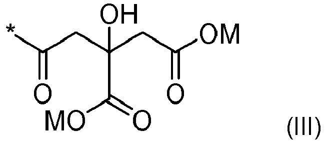
where each M independently of one another is H or an alkali metal or alkaline earth metal ion.

Suitable kinetic regulators of the general structure (II) are esters of citric acid with ethylene glycol, glycerol, or erythritol. Such esters can be mono-, di- or tri-esters of citric acid. Such esters can be monomeric, oligomeric, or polymeric.

It is possible within the present context, that the esters of citric acid with a polyhydric alcohol comprise additional ester groups formed with acids different from citric acid. Such acids especially are acetic acid, propionic acid, and fatty acids. Suitable kinetic regulators of the general structure (II) thus also include co-esters of ethylene glycol, glycerol, or erythritol with citric acid and at least one of acetic acid, propionic acid, and fatty acids.

According to especially preferred embodiments, the kinetic regulator is selected from mono- and/or diglycerides of citric acid. Mono- and/or diglycerides of citric acid have a chemical structure of the following general formula (IV). Accordingly, according to preferred embodiments, the kinetic regulator of the present invention has the general structure (IV): 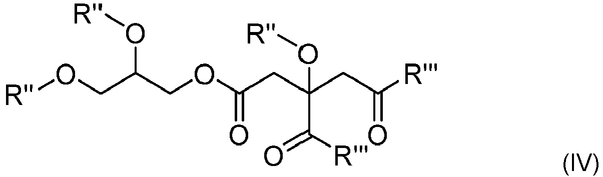 wherein
each R", independently of one another, is H or C(O)-Rʺʺ, with the provision that at least one R" is not H,
where Rʺʺ is an unbranched C2 - C30 alkyl chain or an unbranched C2 - C30 alkenyl chain, wherein the alkenyl chain may comprise between 1 - 6 double bonds, and
each R‴ independently of one another is OM with M being H or an alkali metal or alkaline earth metal ion, or a moiety of the following general structure (V), 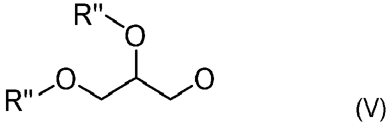 wherein
each R", independently of one another, is H or C(O)-Rʺʺ with Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of citric acid or a mixture of different monoglycerides of citric acid. The kinetic regulator of the present invention can be a diglyceride of citric acid or a mixture of different diglycerides of citric acid. The kinetic regulator of the present invention can also be a mixture of one or more monoglycerides and one or more diglycerides of citric acid. It is preferred that the kinetic regulator of the present invention is a mixture of mono- and diglycerides of citric acid.

Such mono- and/or diglycerides of citric acid are also known as Citrem. They are commercially available and commonly used in the food industry.

Moieties C(O)-Rʺʺ in the above general structures (IV) and (V) preferably are derived from fatty acids. Preferred fatty acids to be present as esters in general structures (IV) and (V) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a tartaric acid ester. Especially, the kinetic regulator is an ester of tartaric acid with a polyhydric alcohol. Further preferred are mixed esters of tartaric acid and fatty acids with polyhydric alcohols.

According to embodiments, the kinetic regulator is an ester of tartaric acid according to the following general structure (VI) 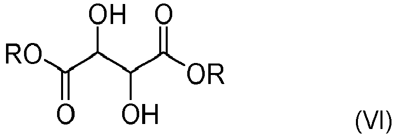 where each R, independently of one another, is H, or a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms, with the provision that at least one of R is not H.

It has been found that kinetic regulators of the general structure (VI) and with at least one hydrophobic moiety R, are particularly suitable within the present context. Suitable kinetic regulators of the general structure (VI) are monobutyl tartrate, dibutyl tartrate, monopentyl tartrate, dipentyl tartrate, monohexyl tartrate, dihexyl tartrate, monooleyl tartrate, dioleyl tartrate, monostearyl tartrate, distearyl tartrate, monolauryl tartrate, dilauryl tartrate, monoprenyl tartrate, diprenyl tartrate, monocyclohexyl tartrate, dicyclohexyl tartrate, monophenyl tartrate, diphenyl tartrate.

According to further embodiments, the kinetic regulator is an ester of tartaric acid with a polyhydric alcohol. Such esters have of the following general structure (VII): 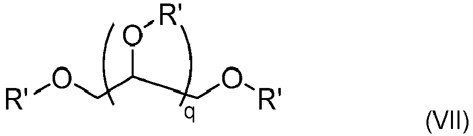
where q is an integer between 0 - 4, preferably 1 or 2, and
R' independently of one another are H, or C(O)-Rʺʺ, or a moiety of general structure (VIII), with the provision that at least one of R' is a moiety of general structure (VIII), where Rʺʺ is an unbranched C2 - C30 alkyl chain or an unbranched C2 - C30 alkenyl chain, wherein the alkenyl chain may comprise between 1 - 6 double bonds, and where the general structure (VIII) is: 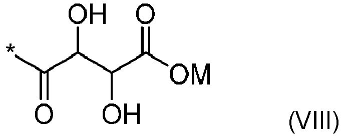
where each M independently of one another is H, or an alkali metal, or alkaline earth metal ion.

Suitable kinetic regulators of the general structure (VII) are esters of tartaric acid with ethylene glycol, glycerol, or erythritol. Such esters can be mono-, or di-esters of tartaric acid. Such esters can be monomeric, oligomeric, or polymeric.

It is possible within the present context, that the esters of tartaric acid with a polyhydric alcohol comprise additional ester groups formed with acids different from tartaric acid. Such acids especially are acetic acid, propionic acid, and fatty acids. Suitable kinetic regulators of the general structure (VII) thus also include co-esters of ethylene glycol, glycerol, or erythritol with tartaric acid and at least one of acetic acid, propionic acid, and fatty acids.

According to especially preferred embodiments, the kinetic regulator is selected from mono- and/or diglycerides of tartaric acid. Mono- and/or diglycerides of tartaric acid have a chemical structure of the following general formula (IX). Accordingly, according to preferred embodiments, the kinetic regulator of the present invention has the general structure (IX): 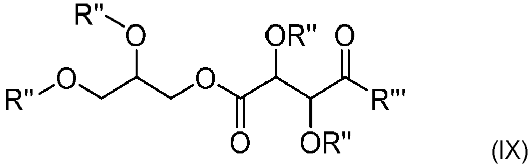 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds, and
each R‴ independently of one another is OM with M being H or an alkali metal or alkaline earth metal ion, or a moiety of the following general structure (X), 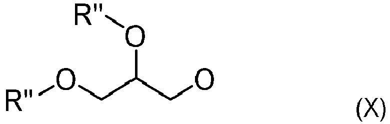 wherein
each R", independently of one another, is H or C(O)-Rʺʺ with Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of tartaric acid or a mixture of different monoglycerides of tartaric acid. The kinetic regulator of the present invention can be a diglyceride of tartaric acid or a mixture of different diglycerides of tartaric acid. The kinetic regulator of the present invention can also be a mixture of one or more monoglycerides and one or more diglycerides of tartaric acid. It is preferred that the kinetic regulator of the present invention is a mixture of mono- and diglycerides of tartaric acid.

Moieties C(O)-Rʺʺ in the above general structures (IX) and (X) preferably are derived from fatty acids. Preferred fatty acids to be present as esters in general structures (IX) and (X) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

Examples of preferred kinetic regulators are diacetylated mono- and diglycerides of tartaric acid.

According to embodiments, the kinetic regulator is a lactic acid ester. Especially, the kinetic regulator is an ester of lactic acid with a polyhydric alcohol. Further preferred are mixed esters of lactic acid and fatty acids with polyhydric alcohols.

According to embodiments, the kinetic regulator is an ester of lactic acid according to the following general structure (XI) 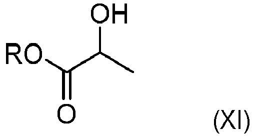 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5-10 C atoms.

Suitable kinetic regulators of the general structure (XI) are butyl lactate, pentyl lactate, hexyl lactate, oleyl lactate, stearyl lactate, lauryl lactate, prenyl lactate, cyclohexyl lactate, phenyl lactate.

According to further embodiments, the kinetic regulator is an ester of lactic acid with a polyhydric alcohol. Such esters have of the following general structure (XII): 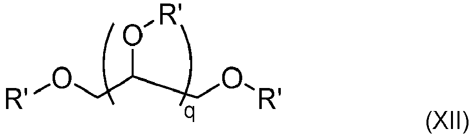
where q is an integer between 0 - 4, preferably 1 or 2, and
R' independently of one another are H, or C(O)-Rʺʺ, or a moiety of general structure (XIII), with the provision that at least one of R' is a moiety of general structure (XIII), where Rʺʺ is an unbranched C2 - C30 alkyl chain or an unbranched C2 - C30 alkenyl chain, wherein the alkenyl chain may comprise between 1 - 6 double bonds, and where the general structure (XIII) is:

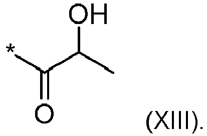

Suitable kinetic regulators of the general structure (XII) are esters of lactic acid with ethylene glycol, glycerol, or erythritol.

It is possible within the present context, that the esters of lactic acid with a polyhydric alcohol comprise additional ester groups formed with acids different from lactic acid. Such acids especially are acetic acid, propionic acid, and fatty acids. Suitable kinetic regulators of the general structure (XII) thus also include co-esters of ethylene glycol, glycerol, or erythritol with lactic acid and at least one of acetic acid, propionic acid, and fatty acids.

According to especially preferred embodiments, the kinetic regulator is selected from monoglycerides of lactic acid. Monoglycerides of lactic acid have a chemical structure of the following general formula (XIV). Accordingly, according to preferred embodiments, the kinetic regulator of the present invention has the general structure (XIV): 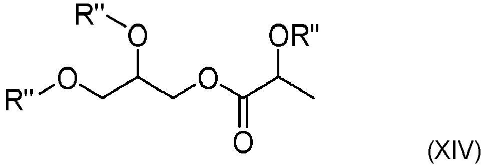 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of lactic acid or a mixture of different monoglycerides of lactic acid.

Moieties C(O)-Rʺʺ in the above general structure (XIV) preferably are derived from fatty acids. Preferred fatty acids to be present as esters in general structure (XIV) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a gluconic acid ester. Especially, the kinetic regulator is an ester of gluconic acid with a polyhydric alcohol. Further preferred are mixed esters of gluconic acid and fatty acids with polyhydric alcohols.

According to embodiments, the kinetic regulator is an ester of gluconic acid according to the following general structure (XV) 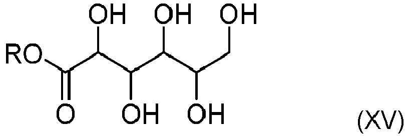 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5-10 C atoms.

Suitable kinetic regulators of the general structure (XV) are butyl gluconate, pentyl gluconate, hexyl gluconate, oleyl gluconate, stearyl gluconate, lauryl gluconate, prenyl gluconate, cyclohexyl gluconate, phenyl gluconate.

According to further embodiments, the kinetic regulator is an ester of gluconic acid with a polyhydric alcohol. Such esters have of the following general structure (XVI): 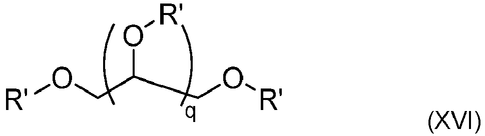
where q is an integer between 0 - 4, preferably 1 or 2, and
R' independently of one another are H, or C(O)-Rʺʺ, or a moiety of general structure (XVII), with the provision that at least one of R' is a moiety of general structure (XVII), where Rʺʺ is an unbranched C2 - C30 alkyl chain or an unbranched C2 - C30 alkenyl chain, wherein the alkenyl chain may comprise between 1 - 6 double bonds, and where the general structure (XVII) is:

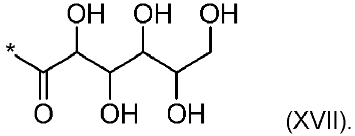

Suitable kinetic regulators of the general structure (XVI) are esters of gluconic acid with ethylene glycol, glycerol, or erythritol.

It is possible within the present context, that the esters of gluconic acid with a polyhydric alcohol comprise additional ester groups formed with acids different from gluconic acid. Such acids especially are acetic acid, propionic acid, and fatty acids. Suitable kinetic regulators of the general structure (XVI) thus also include co-esters of ethylene glycol, glycerol, or erythritol with gluconic acid and at least one of acetic acid, propionic acid, and fatty acids.

According to especially preferred embodiments, the kinetic regulator is selected from monoglycerides of gluconic acid. Monoglycerides of gluconic acid have a chemical structure of the following general formula (XVIII). Accordingly, according to preferred embodiments, the kinetic regulator of the present invention has the general structure (XVIII): 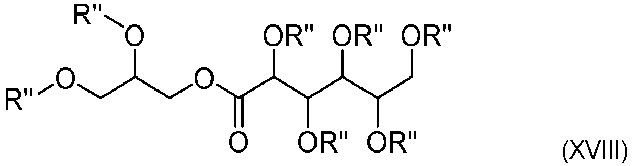 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of gluconic acid or a mixture of different monoglycerides of gluconic acid.

Moieties C(O)-Rʺʺ in the above general structure (XVIII) preferably are derived from fatty acids. Preferred fatty acids to be present as esters in general structure (XVIII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a malic acid ester. Especially, the kinetic regulator is an ester of malic acid with a polyhydric alcohol. Further preferred are mixed esters of malic acid and fatty acids with polyhydric alcohols.

According to embodiments, the kinetic regulator is an ester of malic acid according to the following general structure (IXX) 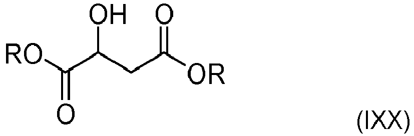 where each R, independently of one another, is H, or a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms, with the provision that at least one of R is not H.

It has been found that kinetic regulators of the general structure (IXX) and with at least one hydrophobic moiety R, are particularly suitable within the present context. Suitable kinetic regulators of the general structure (IXX) are monobutyl malate, dibutyl malate, monopentyl malate, dipentyl malate, monohexyl malate, dihexyl malate, monooleyl malate, dioleyl malate, monostearyl malate, distearyl malate, monolauryl malate, dilauryl malate, monoprenyl malate, diprenyl malate, monocyclohexyl malate, dicyclohexyl malate, monophenyl malate, diphenyl malate.

According to further embodiments, the kinetic regulator is an ester of malic acid with a polyhydric alcohol. Such esters have of the following general structure (XX): 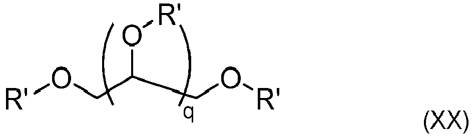
where q is an integer between 0 - 4, preferably 1 or 2, and
R' independently of one another are H, or C(O)-Rʺʺ, or a moiety of general structure (XXIa) or (XXIb), with the provision that at least one of R' is a moiety of general structure (XXIa) or (XXIb), where Rʺʺ is an unbranched C2 - C30 alkyl chain or an unbranched C2 - C30 alkenyl chain, wherein the alkenyl chain may comprise between 1 - 6 double bonds, and where the general structure (XXIa) and (XXIb) are: 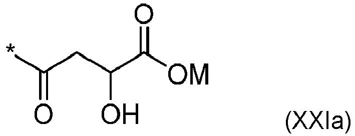 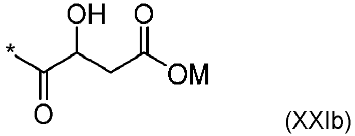
where each M independently of one another is H, or an alkali metal, or alkaline earth metal ion.

Suitable kinetic regulators of the general structure (XX) are esters of malic acid with ethylene glycol, glycerol, or erythritol. Such esters can be mono-, or di-esters of malic acid. Such esters can be monomeric, oligomeric, or polymeric.

It is possible within the present context, that the esters of malic acid with a polyhydric alcohol comprise additional ester groups formed with acids different from malic acid. Such acids especially are acetic acid, propionic acid, and fatty acids. Suitable kinetic regulators of the general structure (XX) thus also include co-esters of ethylene glycol, glycerol, or erythritol with malic acid and at least one of acetic acid, propionic acid, and fatty acids.

According to especially preferred embodiments, the kinetic regulator is selected from mono- and/or diglycerides of malic acid. Mono- and/or diglycerides of malic acid have a chemical structure of the following general formula (XXlla) or (XXllb). Accordingly, according to preferred embodiments, the kinetic regulator of the present invention has the general structure (XXlla) or (XXllb): 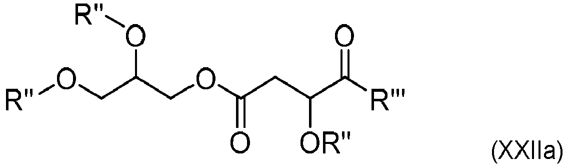 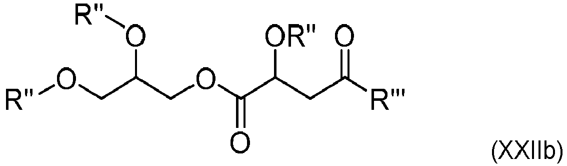 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds, and
each R‴ independently of one another is OM with M being H or an alkali metal or alkaline earth metal ion, or a moiety of the following general structure (XXIII), 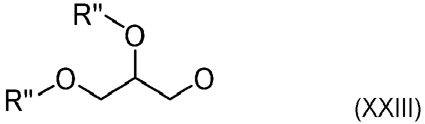 wherein
each R", independently of one another, is H or C(O)-Rʺʺ with Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of malic acid or a mixture of different monoglycerides of malic acid. The kinetic regulator of the present invention can be a diglyceride of malic acid or a mixture of different diglycerides of malic acid. The kinetic regulator of the present invention can also be a mixture of one or more monoglycerides and one or more diglycerides of malic acid. It is preferred that the kinetic regulator of the present invention is a mixture of mono- and diglycerides of malic acid.

Moieties C(O)-Rʺʺ in the above general structures (XXII) and (XXIII) preferably are derived from fatty acids. Preferred fatty acids to be present as esters in general structures (XXII) and (XXIII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a glycolic acid ester. Especially, the kinetic regulator is an ester of glycolic acid with a polyhydric alcohol. Further preferred are mixed esters of glycolic acid and fatty acids with polyhydric alcohols.

According to embodiments, the kinetic regulator is an ester of glycolic acid according to the following general structure (XXIV) 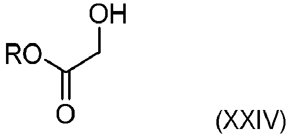 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5-10 C atoms.

Suitable kinetic regulators of the general structure (XXIV) are butyl glycolate, pentyl glycolate, hexyl glycolate, oleyl glycolate, stearyl glycolate, lauryl glycolate, prenyl glycolate, cyclohexyl glycolate, phenyl glycolate.

According to further embodiments, the kinetic regulator is an ester of glycolic acid with a polyhydric alcohol. Such esters have of the following general structure (XXV): 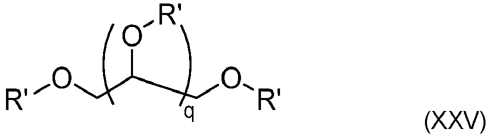
where q is an integer between 0 - 4, preferably 1 or 2, and
R' independently of one another are H, or C(O)-Rʺʺ, or a moiety of general structure (XXVI), with the provision that at least one of R' is a moiety of general structure (XXVI), where Rʺʺ is an unbranched C2 - C30 alkyl chain or an unbranched C2 - C30 alkenyl chain, wherein the alkenyl chain may comprise between 1 - 6 double bonds, and where the general structure (XXVI) is:

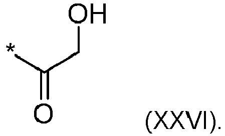

Suitable kinetic regulators of the general structure (XXV) are esters of glycolic acid with ethylene glycol, glycerol, or erythritol.

It is possible within the present context, that the esters of glycolic acid with a polyhydric alcohol comprise additional ester groups formed with acids different from glycolic acid. Such acids especially are acetic acid, propionic acid, and fatty acids. Suitable kinetic regulators of the general structure (XXV) thus also include co-esters of ethylene glycol, glycerol, or erythritol with glycolic acid and at least one of acetic acid, propionic acid, and fatty acids.

According to especially preferred embodiments, the kinetic regulator is selected from monoglycerides of glycolic acid. Monoglycerides of glycolic acid have a chemical structure of the following general formula (XXVII). Accordingly, according to preferred embodiments, the kinetic regulator of the present invention has the general structure (XXVII): 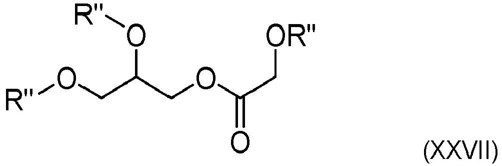 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of glycolic acid or a mixture of different monoglycerides of glycolic acid.

Moieties C(O)-Rʺʺ in the above general structure (XXVII) preferably are derived from fatty acids. Preferred fatty acids to be present as esters in general structure (XXVII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a mandelic acid ester. Especially, the kinetic regulator is an ester of mandelic acid with a polyhydric alcohol. Further preferred are mixed esters of mandelic acid and fatty acids with polyhydric alcohols.

According to embodiments, the kinetic regulator is an ester of mandelic acid according to the following general structure (XXVIII) 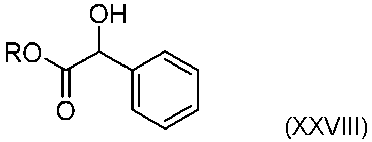 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5-10 C atoms.

Suitable kinetic regulators of the general structure (XXVIII) are butyl mandelate, pentyl mandelate, hexyl mandelate, oleyl mandelate, stearyl mandelate, lauryl mandelate, prenyl mandelate, cyclohexyl mandelate, phenyl mandelate.

According to further embodiments, the kinetic regulator is an ester of mandelic acid with a polyhydric alcohol. Such esters have of the following general structure (XXIX): 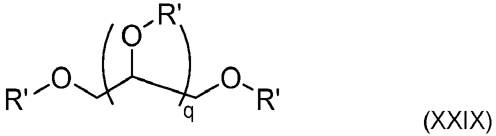
where q is an integer between 0 - 4, preferably 1 or 2, and
R' independently of one another are H, or C(O)-Rʺʺ, or a moiety of general structure (XXX), with the provision that at least one of R' is a moiety of general structure (XXX), where Rʺʺ is an unbranched C2 - C30 alkyl chain or an unbranched C2 - C30 alkenyl chain, wherein the alkenyl chain may comprise between 1 - 6 double bonds, and where the general structure (XXX) is:

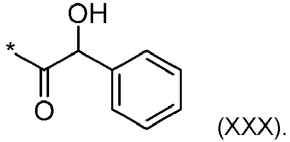

Suitable kinetic regulators of the general structure (XXIX) are esters of mandelic acid with ethylene glycol, glycerol, or erythritol.

It is possible within the present context, that the esters of mandelic acid with a polyhydric alcohol comprise additional ester groups formed with acids different from mandelic acid. Such acids especially are acetic acid, propionic acid, and fatty acids. Suitable kinetic regulators of the general structure (XXIX) thus also include co-esters of ethylene glycol, glycerol, or erythritol with mandelic acid and at least one of acetic acid, propionic acid, and fatty acids.

According to especially preferred embodiments, the kinetic regulator is selected from monoglycerides of mandelic acid. Monoglycerides of mandelic acid have a chemical structure of the following general formula (XXXI). Accordingly, according to preferred embodiments, the kinetic regulator of the present invention has the general structure (XXXI): 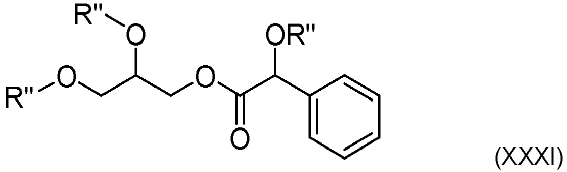 wherein
each R", independently of one another, is H or C(O)-Rʺʺ, with the provision that at least one R" is not H,
where Rʺʺ being an unbranched C2- C30 alkyl chain or an unbranched C2 - C30 alkenyl chain, wherein the alkenyl chain may comprise between 1 - 6 double bonds.

The kinetic regulator of the present invention can be a monoglyceride of mandelic acid or a mixture of different monoglycerides of mandelic acid.

Moieties C(O)-Rʺʺ in the above general structure (XXXI) preferably are derived from fatty acids. Preferred fatty acids to be present as esters in general structure (XXXI) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to preferred embodiments, the at least one kinetic regulator is selected from mono-, and/or diglycerides of citric acid. Mono and/or diglycerides of citric acid are as described by the general structure (IV) above. According to other preferred embodiments, the at least one kinetic regulator is selected from mono-, and/or diglycerides of tartaric acid. According to still other preferred embodiments, the at least one kinetic regulator is selected from lactic acid esters and/or gluconic acid esters.

According to embodiments, a kinetic regulator of the present invention may also be a mixture of two or more of citric acid, citric acid esters, tartaric acid esters, lactic acid esters, gluconic acid esters, malic acid esters, glycolic acid esters, and/or mandelic acid esters. A mixture of two or more may also apply to esters of the same acid but which are different chemically.

Kinetic regulators of the present invention preferably are solids. According to embodiments, kinetic regulators of the present invention are solids with a particle size in the range of 0 - 2000 µm, preferably 250 - 1000 µm, more preferably 250 - 500 µm. It has been found that when kinetic regulators of too low particle size are used, the setting time, i.e. the open time of the mineral binder composition may be unduly prolonged. It has also been found that kinetic regulators with particle size higher than 2000 µm may lead to incomplete reaction of the kinetic regulators within the mineral binder composition and thus a lower efficiency.

Particle sizes can be measured by sieve analysis according to standard ASTM C136/C136M. The process separates fine particles from coarser particles by passing the material through a number of sieves of different mesh sizes. The material to be analyzed is vibrated through a series of sequentially decreasing sieves using a single, or combination of horizontal, vertical or rotational motion. As a result, the mass percentage of particles passing through a sieve of a given size is obtained. In the present context, where a range of particle sizes is given, the lower number refers to the sieve mesh size where >90 w%, preferably >99 w% of particles are retained, while the higher number refers to the sieve mesh size where > 90, preferably >99 w% of particles may still pass.

It is thus preferred, that the kinetic regulator present in an admixture of the present invention has a particle size as measured according to ASTM C136/C136M of 0 - 2000 µm, preferably 250 - 1000 µm, more preferably 250 - 500 µm.

According to embodiments, the kinetic regulator is present in a cementitious composition of the present invention in an amount of 0.01 - 10 w%, preferably 0.05 - 5 w%, more preferably 0.1 - 2 w%, still more preferably 0.25 - 1.5 w%, in each case relative to the total dry weight of cement.

The kinetic regulator can be admixed with the cementitious composition during the preparation thereof. Admixing is possible by means typically applied for the dry or wet mixing of mortars and concrete.

The kinetic regulator can be interground with the cement. The kinetic regulator is thus mixed with other constituents of the dry cementitious composition together with the cement. Intergrinding is possible by means typically applied for the dry grinding of cement, especially by means of a ball mill or a roller mill.

According to embodiments, the cementitious composition comprises cement which is interground with the kinetic regulator.

Aggregates can be any aggregate typically used for construction materials. Typical aggregates are for example rock, crushed stone, gravel, sand, especially quartz sand, river sand and/or manufactured sand. Aggregates may also be bio-based aggregates such as for example hemp fibers. Aggregates, within the present context, also include fillers such as for example finely ground limestone. Suitable aggregates are for example described in standard EN 12620:2013. Aggregates may also be lightweight aggregates as described below. Of course, a mixture of aggregates is possible.

Further additives can be any additives common to the mortar and concrete industry. Especially the further additives can be selected from plasticizers, superplasticizers, shrinkage reducers, air entrainers, de-aerating agents, stabilizers, viscosity modifiers, thickeners, water reducers, retarders, accelerators, water resisting agents, fibers, blowing agents, defoamers, redispersible polymer powders, dedusting agents, chromate reducers, pigments, biocides, corrosion inhibitors, and steel passivating agents. Of course, a mixture of two or more of these additives is also possible.

According to preferred embodiments, a cementitious composition of the present invention comprises at least one plasticizer or super plasticizer selected from lignosulphonates, melamine-formaldehyde sulphonates, and polycarboxylate ethers.

According to preferred embodiments, a cementitious composition of the present invention additionally comprises at least one accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

According to embodiments, an accelerator is comprised in a cementitious composition of the present invention in an amount of 0.01 - 5 w%, preferably 0.1 - 4 w%, more preferably 0.2 - 3 w%, relative to the total weight of cement.

Combinations of a kinetic regulator and an accelerator as described above are particularly useful to control or balance the heat flow from a cementitious composition while at the same time increasing the early strength, in particular the early flexural strength.

A particularly suitable dry cementitious composition comprises cement, especially Portland cement, a kinetic regulator which is a mixture of mono- and diglycerides of citric acid, and an accelerator which is calcium nitrate.

A particularly suitable dry cementitious composition comprises cement, especially Portland cement, a kinetic regulator which is citric acid and an accelerator which is calcium nitrate.

The density of a cementitious composition of the present invention, measured according to standard EN 12390-7:2019 is lower than 2.0 g/cm³, preferably lower than 1.75 g/cm³, more preferably lower than 1.5 g/cm³, still more preferably lower than 1.0 g/cm³, especially lower than 0.8 g/cm³. A cementitious composition of the present invention thus is a lightweight cementitious composition.

Several ways exist to create density of cementitious compositions measured according to standard EN 12390-7:2019 is lower than 2.0 g/cm³, preferably lower than 1.75 g/cm³, more preferably lower than 1.5 g/cm³, still more preferably lower than 1.0 g/cm³, especially lower than 0.8 g/cm³. This includes the use of lightweight aggregates in the cementitious composition as well as chemical or physical foaming, for example by the introduction of air such as in form of a foam, or the formation of a gas before and/or during the setting and curing inside the cementitious composition.

It is possible that at least part of the aggregate in a cementitious composition of the present invention are lightweight aggregates selected from foamed glass, glass spheres, expanded clay, wood particles, rubber particles, plastic particles, expanded polystyrene granules, expanded silica, volcanic rock, such as pumice and/or perlite. The term "lightweight aggregates" stands in particular for aggregates with a particle density ≤ 2'000 kg/m³, preferably ≤ 1'500 kg/m^{3,} especially ≤ 1'250 kg/m³. The particle density of an aggregate is the ratio between the mass of the particle material and the volume occupied by the individual particles. This volume includes the pores within the particle but does not include voids between the particles. With regard to the lightweight aggregates, a particle density of the lightweight aggregates is preferably from 100 - 2'000 kg/m³, especially 200 - 1'500 kg/m³, preferably 250 - 1'300 kg/m³ or 500 - 1'000 kg/m³.

Preferably, a particle size of the lightweight aggregates is from 0.01 - 6 mm, especially 0.05 -2 mm, preferably 0.1 - 1.0 mm, in particular 0.1 -0.6 mm. This is in particular true independently of the type of lightweight aggregate used.

It is possible that the cementitious composition of the present invention is autoclaved aerated concrete, in particular according to standard EN 771-4 or ASTM C1693-11, or is foamed concrete or mortar. Especially, foamed concrete or mortar is a material where a slurry of cement is mixed with an aqueous foam. Typically, the aqueous foam is generated in a foam generator by agitating an aqueous solution of foaming agent with compressed air. Foamed concrete is otherwise also known as aircrete or foamcrete.

According to embodiments, the at least one cement is present in a cementitious composition of the present invention in an amount of 50 - 750 kg/m³, preferably 100 - 650 kg/m³, still more preferably 200 - 550 kg/m³. The kinetic regulator is present in an amount of 0.01 - 10 w%, preferably 0.05 - 5 w%, more preferably 0.1 - 2 w%, still more preferably 0.25 - 1 w%, in each case relative to the total dry weight of cement. Aggregates are optionally present in an amount of 50 - 3500 kg/m³, preferably 100 - 2000 kg/m³. Further additives are optionally present in an amount of 0.1 - 10 w%, relative to the total dry weight of cement. Water is optionally present in a weight ratio of water to cement of 0.1 - 0.8, preferably 0.2 - 0.6, more preferably 0.25 - 0.5.

According to further embodiments, the at least one cement is present in a cementitious composition of the present invention in an amount of 5 - 95 w%, preferably 5 - 60 w%, relative to the total dry weight of the cementitious composition. The kinetic regulator is present in an amount of 0.01 - 10 w%, preferably 0.05 - 5 w%, more preferably 0.1 - 2 w%, still more preferably 0.25 - 1 w%, in each case relative to the total dry weight of cement. Aggregates are present in an amount of 5 - 85 w%, preferably 20 - 80 w% relative to the total dry weight of the cementitious composition. Further additives are optionally present in an amount of 0.1 - 10 w%, relative to the total dry weight of cement. Water is optionally present in a weight ratio of water to powder of 0.1 - 0.6, preferably 0.2 - 0.5, more preferably 0.2 - 0.4.

According to further embodiments, the at least one cement is present in a cementitious composition of the present invention in an amount of 15 - 75 w%, preferably 20 - 50 w%, relative to the total dry weight of the cementitious composition. The kinetic regulator is present in an amount of 0.01 - 10 w%, preferably 0.05 - 5 w%, more preferably 0.1 - 2 w%, still more preferably 0.25 - 1 w%, in each case relative to the total dry weight of cement. Aggregates are present in an amount of 24 - 75 w%, preferably 30 - 60 w% relative to the total dry weight of the cementitious composition. Further additives are optionally present in an amount of 0.1 - 10 w%, relative to the total dry weight of cement. Water is optionally present in a weight ratio of water to powder of 0.1 - 0.6, preferably 0.2 - 0.5, more preferably 0.2 - 0.4

Another preferred cementitious composition of the present invention comprises or essentially consists of
a) 5 - 95 w%, relative to the total dry weight of the cementitious composition, of at least one cement selected from Portland cement, calcium aluminate cement, and/or calcium sulphoaluminate cement, preferably of Portland cement,
b) 0.01 - 10 w%, preferably 0.05 - 5 w%, more preferably 0.1 - 2 w%, still more preferably 0.25 - 1.5 w%, relative to the total dry weight of cement, of at least one kinetic regulator selected from citric acid, mono and/or diglycerides of citric acid of the general structure (IV), or mono and/or diglycerides of tartaric acid of the general structure (IX),
c) optionally 5 - 95 w%, relative to the total dry weight of the cementitious composition, of sand and/or gravel,
d1) optionally 0.01 - 3 w%, relative to the total dry weight of cement, of at least one plasticizer or superplasticizer,
d2) optionally 0.01 - 5 w%, preferably 0.1 - 4 w%, more preferably 0.2 - 3 w%, relative to the total dry weight of cement, of at least one accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate, and
e) optionally water in a weight ratio of water to cement of between 0.1 - 1.0, preferably 0.2 - 0.6, more preferably 0.25 - 0. 4.

Hardening of a cementitious composition of the present invention starts once water is added and the hardening reactions proceeds with time. A hardened cementitious composition thus is a cementitious composition including water and which has reacted for some time, typically for at least 7 days, or 28 days, or 56 days, or longer. Typically the reaction is done at surrounding temperature in a range between 5 - 35 °C or higher and at ambient pressure. Or in the case of autoclaved concrete a hardened cementitious composition has reacted for several hours, for example 12 hours, at high temperature, for example 190 °C, and at elevated pressure, for example 9-12 bar.

In another aspect the present invention relates to the use of a cementitious composition as described above for thermal insulation, acoustic insulation, and/or passive fire protection.

According to embodiments, the hardened cementitious composition has a thermal conductivity of between 0.02 and 0.75 W/m•K, preferably 0.03 and 0.15 W/m•K measured as described in standard DIN EN 12664:2001.

According to embodiments, the hardened cementitious composition of the present invention has fire resistant properties and can be used for passive. Fire resistant properties within the present context exist when requirements of at least one of the following standards are fulfilled: UL 790, UL 1256, FM Approvals 4880, FM Approvals 4882, ASTM E84, ASTM E108, EN 13501-1. Very preferably, a hardened cementitious composition of the present invention complies with class A1 or A2 according to standard EN 13501 :2019-05.

In another aspect the present invention relates to the use of a cementitious composition as described above as part of a thermal insulation system, as part of an acoustic insulation system, as part of a fire protection system, as a cover board, as an annular fill, as trench backfill, as precast block, as precast panel, as precast wall element, as load-bearing thermal insulation element, as sub-base in road construction, or as infill of hollow blocks.

### Brief explanation of figures

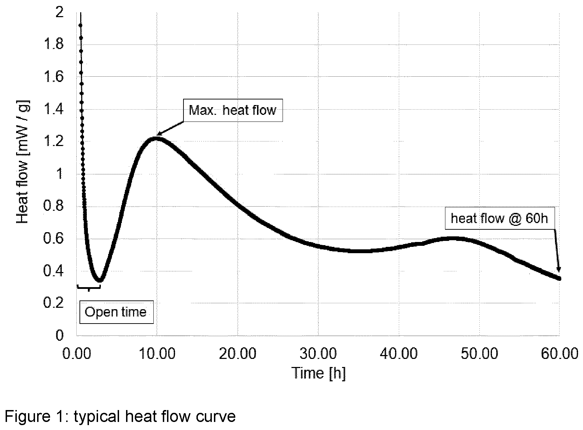

Figure 1 shows a typical heat flow curve. Points in the heat flow curve used to determine the max. heat flow and the heat flow @ 60h are indicated in figure 1. The open time is indicated in figure 1.

It can be seen from figure 1 that the open time is measured from the beginning of mixing until the time where the heat flow curve starts to increase for the first time. The max. heat flow corresponds to the global maximum of the heat flow curve (the initial peak detected within the first minutes after mixing is disregarded because it is related to the mixing).

### Examples

Heat flow curves were measured in an isothermal process as described in standard ASTM C1702-17. Examples were measured using an instrument i-CAL 8000 from Calmetrix.

The maximum heat flow reported in below tables is the global maximum of the heat flow curve, the heat flow at 60 h after mixing with water is given in below tables, the open time given in below tables is the time where the heat flow curve starts to increase. For the determination of maximum heat flow and open time, the initial peak in heat flow, encountered within the first appr. 2 minutes after mixing, is disregarded because this heat flow is more related to the mixing process.

### Example 1

A lightweight concrete was prepared with the following mix design
340 kg/m³ cement CEM II/B-S,
70 Vol-% expanded clay (round, 2-6 mm, particle density 540 kg/m³),
30 Vol-% lightweight sand (0-4 mm, particle density 750 kg/m³),
0.5 w%, relative to the weight of cement, of a superplasticizer based on polycarboxylate ether,
0.2 w%, relative to the weight of cement, of a mixture of surfactants (available as Sika^{®} Luftporenbildner LPS A-94 from Sika Deutschland GmbH),
1.5 w%, relative to the weight of cement, of the respective kinetic regulator as indicated in the below table 1.

The dry mix was mixed with water in an amount of 195 kg/m³.

Results were measured as indicated above.

**Table 1: examples 1-1 (inventive) to 1-2 (not inventive)**

| Example | Kinetic regulator | Max heat flow [mW /g] | Heat flow @ 60h [mW/g] | Open time [h] |
|---|---|---|---|---|
| 1-1 | citric acid ester of mono- and diglycerides* | 1.2 | 1.2 | 25 |
| 1-2 | none | 4.2 | 0.4 | 0.1 |

| | | | | |
|---|---|---|---|---|
| * E472c emulsifier | | | | |

It can be seen from the results in above table 1 that a kinetic regulator of the present invention can significantly reduce the maximum heat flow released from a lightweight concrete. At the same time the open time is still acceptable for practical applications.

## Claims

1. A cementitious composition, especially a concrete or a mortar, comprising
a) at least one cement,
b) at least one kinetic regulator selected from hydroxy carboxylic acids and their derivatives, especially esters of hydroxy carboxylic acids,
c) optionally aggregates,
d) optionally further additives, and
e) optionally water,
**characterized in that** the density of the cementitious composition, especially concrete or a mortar, measured according to standard EN 12390-7:2019 is lower than 2.0 g/cm³, preferably lower than 1.75 g/cm³, more preferably lower than 1.5 g/cm³, still more preferably lower than 1.0 g/cm³, especially lower than 0.8 g/cm³.

2. The cementitious composition as claimed in claim 1, **characterized in that** the at least one kinetic regulator is selected from citric acid, citric acid esters, tartaric acid esters, lactic acid esters, gluconic acid esters, malic acid esters, glycolic acid esters, and/or mandelic acid esters.

3. The cementitious composition according to claim 1, **characterized in that** the at least one kinetic regulator is selected from mono- and/or diglycerides of citric acid, and mono- and/or diglycerides of tartaric acid.

4. The cementitious composition as claimed in any of the preceding claims, **characterized in that** the kinetic regulator has a particle size as measured according to ASTM C136/C136M of 0 - 2000 µm, preferably 0 - 1000 µm, more preferably 0- 500 µm, even more preferably 250-500 µm .

5. The cementitious composition as claimed in any of the preceding claims, **characterized in that** the kinetic regulator is present in an amount of 0.01 - 10 w%, preferably 0.05 - 5 w%, more preferably 0.1 - 2 w%, still more preferably 0.25 - 1.5 w%, in each case relative to the total dry weight of cement.

6. The cementitious composition as claimed in any of the preceding claims, **characterized in that** additionally an accelerator is present, said accelerator being selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

7. The cementitious composition as claimed in any of the preceding claims, **characterized in that** an accelerator is comprised in an amount of 0.01 - 5 w%, preferably 0.1 - 4 w%, more preferably 0.2 - 3 w%, relative to the total weight of cement.

8. The cementitious composition as claimed in any of the preceding claims, **characterized in that** the cement comprises Portland clinker, preferably the cement is of type CEM I, CEM II, CEM III, CEM IV, or CEM V as described in standard EN 197-1, or cement of type CEM VI as described in standard DIN EN 197-5, or cement according to standard ASTM C140-05.

9. The cementitious composition according to any of the preceding claims, **characterized in that** it comprises a cement which is interground with the kinetic regulator

10. The cementitious composition as claimed in any of the preceding claims, **characterized in that** at least part of the aggregate are lightweight aggregates selected from foamed glass, glass spheres, expanded clay, wood particles, rubber particles, plastic particles, expanded polystyrene granules, expanded silica, volcanic rock, such as pumice and/or perlite.

11. The cementitious composition as claimed in any of the preceding claims, **characterized in that** the cementitious composition is autoclaved aerated concrete according to standard EN 771-4 or ASTM C1693-11, or is foamed concrete.

12. Use of a cementitious composition as claimed in any of claims 1 - 11 for thermal insulation, acoustic insulation, and/or passive fire protection.

13. Use of a cementitious composition as claimed in any of claims 1 - 11 as part of a thermal insulation system, as part of an acoustic insulation system, as part of a fire protection system, as a cover board, as an annular fill, as trench backfill, as precast block, as precast panel, as precast wall element, as load-bearing thermal insulation element, as sub-base in road construction, or as infill of hollow blocks.
